# EUROPÄISCHE PATENTSCHRIFT

(11) **EP 0 686 720 B1**
(45) Veröffentlichungstag und Bekanntmachung des Hinweises auf die Patenterteilung: **01.04.1998**
(21) Anmeldenummer: 95108277.5
(22) Anmeldetag: 31.05.1995
(51) Int. Cl.: D06F 37/20, F16F 7/09

(54) **Reibungsdämpfer, insbesondere für Waschmaschinen mit Schleudergang**
Friction damper, especially for washing and spin drying machines
Amortisseur à frottement notamment pour machine à laver et à essorer

(30) Priorität: 07.06.1994 DE 4419870
(43) Veröffentlichungstag der Anmeldung: 13.12.1995
(73) Patentinhaber: SUSPA COMPART Aktiengesellschaft, 90518 Altdorf (DE)
(72) Erfinder: Ehrnsberger, Manfred, D-92348 Berg (DE); Mayer, Dieter, D-92237 Sulzbach-Rosenberg (DE); Siegner, Helge, D-90518 Altdorf (DE)
(74) Vertreter: Rau, Manfred, Dr. Dipl.-Ing.

(56) Entgegenhaltungen:
- EP-A- 0 027 753
- EP-A- 0 407 755
- WO-A-92/04555
- GB-A- 2 011 021
- US-A- 2 900 162

## Beschreibung

Die Erfindung betrifft einen Reibungsdämpfer nach dem Oberbegriff des Anspruches 1.

Bei einem derartigen aus der EP 0 407 755 A1 bekannten Reibungsdämpfer sind mehrere Dämpfungs-Kolben auf einem Kolben-Lager-Abschnitt des Stößels verschiebbar gelagert. Beiderseits jedes Dämpfungs-Kolbens sind auf dem Kolben-Lager-Abschnitt Anschläge angebracht, gegen die Federelemente anliegen, bei denen es sich um Tellerfedern oder elastische Ringe mit Eigendämpfung, z.B. PU-Ringe handeln kann. Die Federelemente können unterschiedlich in Länge und Einstellung ausgebildet sein, um eine verzögerte Mitnahme der einzelnen Reibbeläge zu erreichen. Durch diese Ausgestaltung soll eine amplitudenabhängige Schwingungsdämpfung erreicht werden, wobei insbesondere beim Richtungswechsel der Bewegung des Stößels relativ zum Gehäuse ein weicher Übergang erreicht werden soll. Hierdurch soll das System geräuscharm arbeiten.

Der Erfindung liegt die Aufgabe zugrunde, einen Reibungsdämpfer der gattungsgemäßen Art so auszugestalten, daß bei Beibehaltung eines weichen geräuscharmen Übergangs an den Umkehrpunkten eine gleichmäßige Dämpfung über den vollen Hub bei großen Schwingungsamplituden und eine weitgehende Dämpfungsfreiheit bei kleinen Schwingungsamplituden erreicht wird.

Diese Aufgabe wird erfindungsgemäß durch die Merkmale im Kennzeichnungsteil des Anspruches 1 gelöst. Durch die erfindungsgemäßen Maßnahmen wird erreicht, daß bei Betrieb im unterkritischen Bereich zwischen den Umkehrpunkten die volle Reibungskraft erreicht wird, während gleichzeitig an den Umkehrpunkten ein weicher Übergang erzielt wird. Die Unteransprüche beinhalten die zum Teil erfinderische Ausgestaltung des im Anspruch 1 angegebenen allgemeinen Lösungsprinzips.

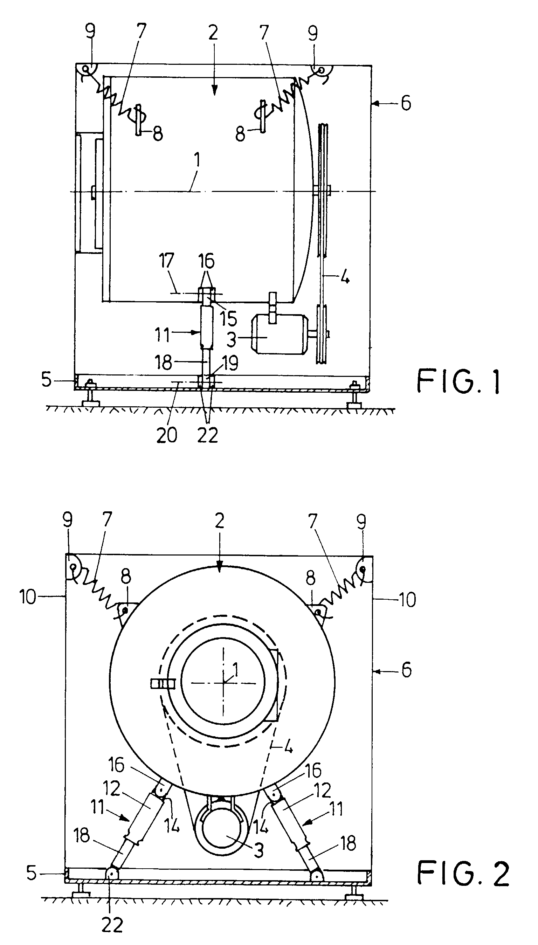

Weitere Merkmale, Vorteile und Einzelheiten der Erfindung ergeben sich aus der nachfolgenden Beschreibung eines Ausführungsbeispieles anhand der Zeichnung. Es zeigt
- Fig. 1: eine Trommelwaschmaschine in schematischer Darstellung in Seitenansicht,
- Fig. 2: die Trommelwaschmaschine gemäß Fig. 1 in Vorderansicht,
- Fig. 3: einen Schwingungsdämpfer im Längsschnitt,
- Fig. 4: einen Teil-Längsschnitt durch eine gegenüber Fig. 3 abgewandelte Ausführungsform eines Schwingungsdämpfers,
- Fig. 5: einen Teil-Längsschnitt durch eine weitere abgewandelte Ausführungsform eines Schwingungsdämpfers,
- Fig. 6: einen Teil-Längsschnitt durch eine weitere abgewandelte Ausführungsform eines Schwingungsdämpfers und
- Fig. 7: einen Teil-Längsschnitt durch eine weitere abgewandelte Ausführungsform eines Schwingungsdämpfers.

Eine Trommelwaschmaschine mit waagerechter Trommelachse 1 weist ein schwingungsfähiges Waschaggregat 2 mit einem Antriebsmotor 3 auf, der die nicht im einzelnen dargestellte Waschtrommel über einen Riementrieb 4 antreibt. Weitere mit dem Waschaggregat 2 verbundene Bestandteile, beispielsweise ein Getriebe, sind der Einfachheit halber nicht dargestellt. Das schwingungsfähige Waschaggregat 2 ist an einem auf einem durch einen Grundrahmen 5 gebildeten Maschinengestell abgestützten Waschmaschinen-Gehäuse 6 mittels Schrauben-Zugfedern 7 aufgehängt. Die Zugfedern 7 sind einerseits an Ösen 8 angebracht, die im oberen Bereich des Waschaggregates 2 angebracht sind. Andererseits sind sie an Ösen 9 aufgehängt, die an Seitenwänden lo des Gehäuses 6 ausgebildet sind.

Anstelle einer derartigen Aufhängung des Waschaggregates 2 an Zugfedern 7 kann auch eine bekannte Abstützung des Waschaggregates 2 über sogenannte Federbeine auf dem Maschinengestell 5 vorgesehen sein, wie sie aus der EP o 1o8 217 B1 (entsprechend US-PS 4 991 412) bekannt sind. Entscheidend ist, daß das Waschaggregat 2 frei schwingungsfähig aufgehängt bzw. abgestützt ist.

Zwischen dem Waschaggregat 2 und dem Maschinengestell 5 sind weiterhin Schwingungsdämpfer 11 angeordnet, bei denen es sich um Reibungsdämpfer handelt.

Bei dem nachfolgend geschilderten Ausführungsbeispiel weist der Schwingungsdämpfer 11 ein Gehäuse 12 auf. Das Gehäuse 12 besteht im wesentlichen aus einem zylindrischen Rohr 13, das an einem Ende mittels eines Bodens 14 verschlossen ist. An der Außenseite des Bodens 14 ist eine Gelenkbüchse 15 als Anlenkelement angebracht, mittels derer der Schwingungsdämpfer 11 an einem Lager 16 am Waschaggregat 2 so angebracht wird, daß der Schwingungsdämpfer 11 um eine Schwenkachse 17 relativ zum Waschaggregat 2 schwenkbar angebracht ist, die parallel zur Trommelachse 1 verläuft.

Der jeweilige Schwingungsdämpfer 11 weist weiterhin einen Stößel 18 auf, der an seinem äußeren Ende ebenfalls eine Gelenkbüchse 19 aufweist, deren Schwenkachse 2o gleichermaßen wie die Schwenkachse 17 die Mittel-Längs-Achse 21 des jeweiligen Schwingungsdämpfers 11 senkrecht schneidet. Mit dieser Gelenkbüchse 19 wird der Schwingungsdämpfer 11 in einem am Maschinengestell 5 angebrachten Lager 22 in der Weise schwenkbar festgelegt, daß die Schwenkachse 2o ebenfalls parallel zur Trommelachse 1 verläuft.

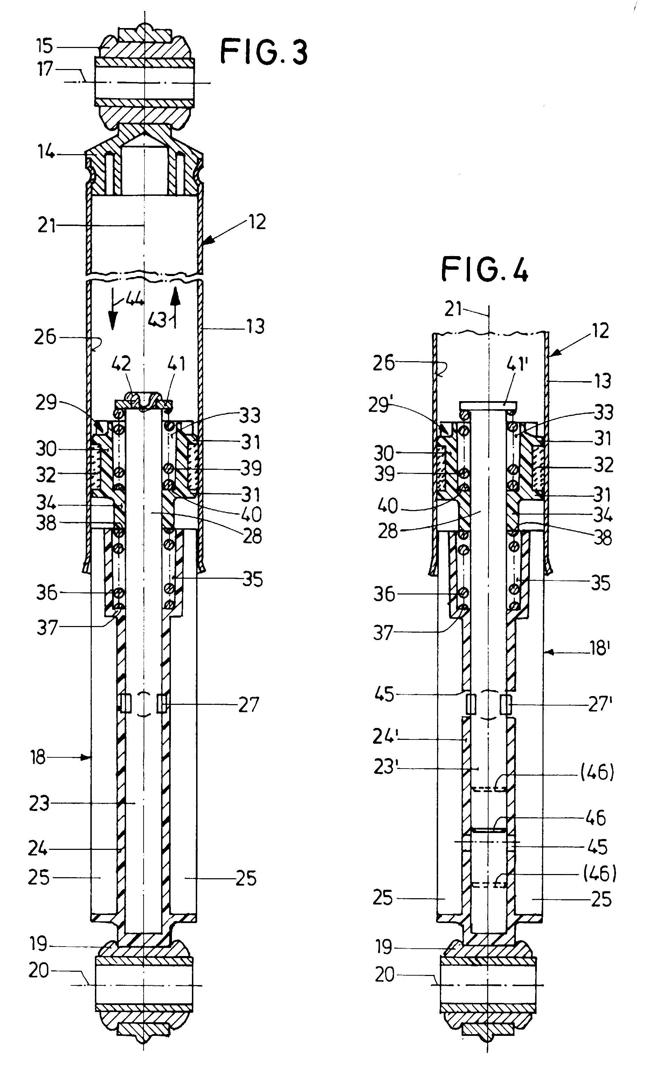

Wie Fig. 3 entnehmbar ist, weist der Stößel 18 eine zylindrische Stößel-Stange 23 auf, die koaxial zur Achse 21 angeordnet ist. Diese Stange 23 ist über einen Teil ihrer Länge von einem Stößel-Rohr 24 umgeben, an dessen Außenseite Führungsrippen 25 ausgebildet sind, mittels derer der Stößel 18 an der zylindrischen Innenwand 26 des Rohres 13 geführt ist. Während die Stößel-Stange 23 aus Stahl besteht, besteht das Stößel-Rohr 24 aus Kunststoff und ist um die Stößel-Stange 23 herumgespritzt. Eine in Richtung der Achse 21 feste Verbindung zwischen der Stößel-Stange 23 und dem Stößel-Rohr 24 wird dadurch erreicht, daß an der Stößel-Stange 23 Vorsprünge 27 ausgebildet sind, die durch Verformung der Stange 23 erzeugt werden.

Die Stößel-Stange 23 ragt an ihrem der Gelenkbüchse 19 abgewandten Ende mit einem Kolben-Lager-Abschnitt 28 über das Stößel-Rohr 24 hinaus. Auf diesem Abschnitt 28 ist ein Dämpfungs-Kolben 29 in Richtung der Achse 21 verschiebbar gelagert. Er weist einen Ringzylinder-Abschnitt 30 auf, der an seinen beiden Enden mit zur Innenwand 26 des Rohres 13 hin vorspringenden Ringflanschen 31 versehen ist. Auf diesem Ringzylinder-Abschnitt 30 ist zwischen den beiden Ringflanschen 31 ein Reibbelag 32 angebracht, der beispielsweise aus einem Polyurethanschaumstoff besteht, in dessen offenen oder geöffneten Zellen Schmierfett untergebracht ist.

Zwischen dem Ringzylinder-Abschnitt 30 und dem Abschnitt 28 der Stößel-Stange 23 ist ein Ringraum 33 ausgebildet. Der Dämpfungs-Kolben 29 weist auf seiner dem Stößel-Rohr 24 zugewandten Seite eine einstückig mit dem Ringzylinder-Abschnitt 30 ausgebildete ringzylindrische Lagerbüchse 34 auf, die auf dem Kolben-Lager-Abschnitt 28 der Stößel-Stange 23 in Richtung der Achse 21 verschiebbar und um die Achse 21 drehbar, radial zur Achse 21 aber fest geführt ist.

Das Stößel-Rohr 24 weist an seinem dem Kolben-Lager-Abschnitt 28 zugewandten Ende eine gegenüber der Stößel-Stange 23 erweiterte ringraumförmige Aufnahme 35 auf, die zumindest in ihrem dem Dämpfungs-Kolben 29 benachbarten Bereich radial zur Achse 21 so weit ist, daß die Lagerbüchse 34 in sie hineingleiten kann. In dieser Aufnahme 35 ist auf dem Abschnitt 28 eine vorgespannte Schrauben-Druckfeder 36 angeordnet, die sich einerseits gegen einen Boden 37 der Aufnahme 35 und andererseits gegen eine zugewandte Stirnseite 38 der Lagerbüchse 34 abstützt.

In dem Ringraum 33 des Dämpfungs-Kolbens 29 ist ebenfalls auf dem Abschnitt 28 eine vorgespannte Schrauben-Druckfeder 39 angeordnet, die sich einerseits gegen eine weitere Stirnseite 40 der Lagerbüchse 34 und andererseits gegen ein durch eine Ringscheibe gebildetes Widerlager 41 am freien Ende des Kolben-Lager-Abschnitts 28 der Stößel-Stange 23 abstützt.

Diese das Widerlager 41 bildende Ringscheibe ist auf einem gestauchten Zapfen 42 der Stößel-Stange 23 befestigt. Der Ringraum 33 ist radial zur Achse 21 so weit, daß der Dämpfungs-Kolben 29 bei entsprechender Kompression der Druckfeder 39 so weit über das Widerlager 41 hinweggleiten kann, daß dieses in den Ringraum 33 gelangt.

In Fig. 3 ist der Dämpfungs-Kolben 29 in einer Mittelstellung auf dem Kolben-Lager-Abschnitt 28 dargestellt, in dem die durch die Druckfedern 36 und 39 einander entgegengerichtet auf den Dämpfungs-Kolben 29 wirkenden Kräfte sich aufheben, also im Gleichgewicht sind.

Wenn der Stößel 18 in das Rohr 13 in Einschub-Richtung 43 hineingeschoben wird, dann wird in Abhängigkeit von der zwischen dem Reibbelag 32 und der Innenwand 26 wirkenden, durch Reibung erzeugten Dämpfungskraft der Dämpfungs-Kolben 29 auf dem Kolben-Lager-Abschnitt 28 in entgegengesetzter Richtung verschoben, wobei die Druckfeder 36 zusammengedrückt, also weiter vorgespannt wird, während die Druckfeder 39 entspannt, also ausgedehnt wird. Am Ende der Einschubbewegung des Stößels 18 in das Rohr 13 in Richtung 43, also am Umkehrpunkt der Bewegung des Stößels 18 aus der Einschub-Richtung 43 in die entgegengesetzte Ausschub-Richtung 44 bewegt sich der Dämpfungs-Kolben 29 noch eine geringe Wegstrecke weiter in Richtung 43, da sich die in der Aufnahme 35 befindliche Druckfeder 36 entspannt, während die im Ringraum 33 befindliche Druckfeder 39 wieder zusammengedrückt wird. Während die Bewegungsumkehr des Stößels 18 abrupt, grundsätzlich also über eine Strecke, deren Betrag im Bereich von Null ist, stattfindet, erfolgt die Abbremsung der Bewegung des Dämpfungs-Kolbens 29 in Einschub-Richtung 43 über eine deutlich vorgegebene Wegstrecke.

Wenn der Stößel sich dann in der entgegengesetzten Ausschub-Richtung 44 bewegt, wird zuerst die Druckfeder 39 komprimiert, wobei gleichzeitig die Druckfeder 36 entspannt wird. Die Umkehrbewegung des Kolbens 29 erfolgt also sehr weich, was zu einer Geräuschminderung am Ende der Bewegung des Stößels 18 führt. In Ausschub-Richtung 44 erfolgt ein entsprechendes Abbremsen und Wiederbeschleunigen des Kolbens 29 in umgekehrter Richtung. Wenn das Waschaggregat 2 beim Durchgang von der Waschdrehzahl zur Schleuderdrehzahl den Resonanzbereich durchläuft, sind die Schwingungswege des Stößels 18 gegenüber dem Rohr 13 besonders lang. Im gesamten Bereich zwischen den geschilderten Umkehrbewegungen des Dämpfungs-Kolbens 29 ist die zwischen Reibbelag 32 und Innenwand 26 erzeugte Reibungskraft konstant, d.h. die volle Dämpfungskraft wird erzeugt.

Andererseits schwingt der Stößel 18 bei überkritischer Drehzahl des Waschaggregates 2, also bei der Schleuderdrehzahl, nur um sehr kurze Wegstrecken relativ zum Rohr 13. Bei derartigem überkritischem Betrieb wird an sich eine Dämpfungsarbeit nicht erwünscht. Die Bewegungen des Stößels 18 erfolgen hierbei ganz überwiegend bei gegenüber dem Rohr 13 unbewegtem Dämpfungs-Kolben 29. Die hierbei geleistete Dämpfungsarbeit durch Umsetzung von Schwingungsenergie in Wärme geht gegen Null, wobei gleichzeitig aber eine weiche Umkehr jeweils am Umkehrpunkt des Stößels 18 aus der Richtung 43 in die Richtung 44 und umgekehrt sichergestellt ist. Der Geräuschminderungseffekt tritt insbesondere bei hohen Enddrehzahlen, also bei hohen Schleuderdrehzahlen des Waschaggregates 2 auf.

Die nachfolgend beschriebenen Schwingungsdämpfer haben das gleiche Wirkungsprinzip wie der Schwingungsdämpfer nach Fig. 3. Sie unterscheiden sich von diesem in ihrer Ausgestaltung. Einer erneuten Beschreibung des Wirkungsmechanismus bedarf es insoweit nicht.

In Fig. 4 ist eine Abwandlung des Schwingungsdämpfers nach Fig. 3 dargestellt, bei der die Stößel-Stange 23' nicht fest in das Stößel-Rohr 24' des Stößels 18' eingespritzt, sondern nachträglich eingeschoben ist. Die Vorsprünge 27' werden nach der Montage angebracht, und zwar durch Verformung der Stößel-Stange 23' im Bereich von Ausnehmungen 45, die in dem Stößel-Rohr 24' ausgebildet sind. Bei dieser Ausgestaltung kann das Widerlager 41' beispielsweise durch eine flanschartige bzw. ringbundartige Stauchung der Kolbenstange erzeugt sein; es soll jedenfalls bereits vor der Montage vorhanden sein. Durch die geschilderte Ausgestaltung ist es möglich, die Stößel-Stange 23' unterschiedlich tief in das Stößel-Rohr 24' einzuschieben, so daß die Schrauben-Druckfedern 36 und 39 unterschiedlich vorgespannt werden. Des weiteren ist es auch möglich, unterschiedlich lange Druckfedern 36 bzw. 39 einzusetzen und dadurch deren Charakteristiken zu verändern. In Fig. 4 ist das Ende 46 der Stößel-Stange 23' für die dargestellte Ausführung ausgezogen dargestellt. Es ist für zwei andere Positionen der Stößel-Stange 23' gestrichelt dargestellt.

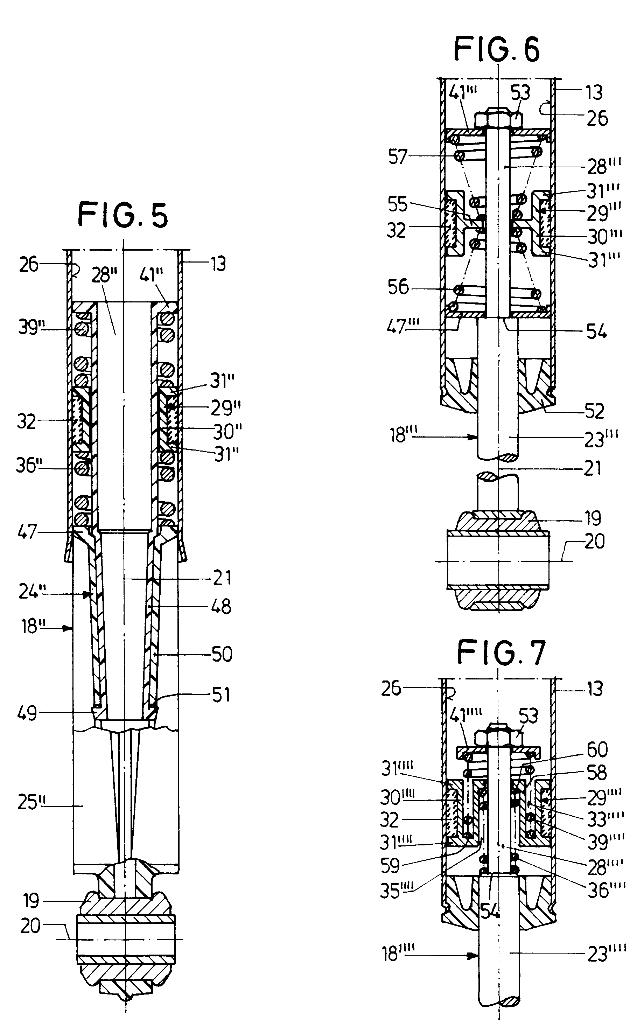

Fig. 5 zeigt einen Stößel 18", der ausschließlich aus Kunststoff besteht. Er weist ein Stößel-Rohr 24" auf, an dessen freiem Ende die Gelenkbüchse 19 angebracht ist. Das Stößel-Rohr 24" ist mit Führungsrippen 25" zur Führung im Rohr 13 versehen. Innerhalb des Rohres 13 ist der Stößel 18" mit einem zylindrischen Kolben-Lager-Abschnitt 28" versehen, der an seinem im Rohr 13 befindlichen freien Ende mit einem Widerlager 41" in Form eines nach außen gegen die Innenwand 26 des Rohres 13 vorspringenden und gegen diese anliegenden Flansches versehen ist. Auf dem Kolben-Lager-Abschnitt 28" ist ein Dämpfungs-Kolben 29" angeordnet, der aus einem Ring-Zylinder-Abschnitt 30" und diesen an seinen beiden Enden begrenzenden Ringflanschen 31" gebildet ist. Er hat im Querschnitt also C-Form. Der Dämpfungskolben 29" ist auf dem Kolben-Lager-Abschnitt 28" nicht geführt, sondern schwimmend angeordnet. Am Übergang vom Kolben-Lager-Abschnitt 28" zum Stößel-Rohr 24" ist ein Anschlag 47 vorgesehen, der ringbundartig bzw. flanschartig zur Innenwand 26 des Rohres 13 vorspringt und gegen dieses anliegt. Zwischen dem Dämpfungs-Kolben 29" und dem Widerlager 41" ist eine Schrauben-Druckfeder 39" angeordnet, während die zweite Schrauben-Druckfeder 36" zwischen dem Dämpfungs-Kolben 29" und dem Anschlag 47 angeordnet ist. Die Montage wird dadurch ermöglicht, daß das Stößel-Rohr 24" zweiteilig ausgebildet ist. Es besteht einerseits aus dem Kolben-Lager-Abschnitt 28", an dem ein innerer kegelstumpfförmig ausgebildeter Halteabschnitt 48 ausgebildet ist, an dessen freiem Ende nach außen vorspringende Haltevorsprünge 49 ausgebildet sind. Der andere Teil des Stößel-Rohres 24" besteht aus einem äußeren Stößel-Rohrabschnitt 50, an dem die Führungsrippen 25" und der Anschlag 47 ausgebildet und die Gelenkbüchse 19 befestigt ist. Der äußere Stößel- Rohrabschnitt 50 wird nach der Montage der Druckfedern 36" und 39" und des Dämpfungs-Kolbens 29" auf den inneren Halteabschnitt 48 geschoben, wobei die Haltevorsprünge 49 in entsprechende Öffnungen 51 elastisch einrasten.

Bei der Ausführungsform nach Fig. 6 besteht der Stößel 18"' nur aus einer Stößel-Stange 23"', an deren äußerem freien Ende die Gelenkbüchse 19 befestigt ist. Die Stößel-Stange 23"' ist im wesentlichen in einer Führungsbüchse 52 geführt, die in einem Ende des Rohres 13 befestigt ist. Die Stößel-Stange 23"' ist mit einem verjüngen Abschnitt als Kolben-Lager-Abschnitt 28''' versehen, der im Bereich seines freien Endes mit einem Widerlager 41"' in Form einer gegen die Innenwand 26 des Rohres 13 anliegenden Scheibe versehen ist, die durch eine Mutter 53 gehalten wird. Am Übergang des Kolben-Lager-Abschnitts 28"' zur Stößel-Stange 23"' ist ein Bund 54 ausgebildet, gegen den wiederum eine Scheibe als Anschlag 47"' anliegt, die sich ebenfalls gegen die Innenwand 26 des Rohres 13 abstützt. Zwischen dem Widerlager 41"' und dem Anschlag 47"' ist ein Dämpfungskolben 29"' angeordnet, der - wie oben bereits beschrieben - aus einem Ringzylinder-Abschnitt 30"' mit Ringflanschen 31"' an seinen beiden Enden besteht, die zwischen sich einen Reibbelag 32 aufnehmen. Innerhalb des Ring-Zylinder-Abschnittes 30"' ist an diesem ein Anlage-Ring 55 ausgebildet, der Spiel gegenüber dem Kolben-Lager-Abschnitt 28"' aufweist, auf diesem also nicht geführt ist. Der Dämpfungs-Kolben 29"' ist also gegenüber dem Kolben-Lager-Abschnitt 28"' schwimmend gelagert. Gegen den Anlage-Ring 55 liegen zwei Kegel-Druckfedern 56, 57 an, die sich andererseits gegen den Anschlag 47"' bzw. das Widerlager 41"' abstützen. Dadurch daß die Druckfedern als Kegel-Druckfedern 56, 57 ausgebildet sind, die mit ihren Enden geringeren Durchmessers - bezogen auf die Richtung der Achse 21 - innerhalb des Dämpfungs-Kolbens 29"' abgestützt sind, wird die axiale Länge des Dämpfungs-Kolbens 29"' abzüglich der axialen Erstreckung des Anlage-Rings 55 an Baulänge eingespart. Des weiteren ermöglicht der Einsatz von Kegel-Druckfedern 56, 57, die ebenfalls vorgespannt sind, die Erzeugung einer progressiven Kennlinie.

Bei dem Ausführungsbeispiel nach Fig. 7 ist der Stößel 18"" sehr ähnlich dem der Ausführungsform nach Fig. 6 ausgebildet, wobei der Kolben-Lager-Abschnitt 28"" kürzer ausgebildet ist. Der Dämpfungs-Kolben 29"" besteht aus einem Ring-Zylinder-Abschnitt 30"" mit Ringflanschen 31"", die zwischen sich einen Reibbelag 32 aufnehmen, der gegen die Innenwand 26 des Rohres 13 anliegt. Im Inneren des Ring-Zylinder-Abschnittes 30"" ist ein mit diesem einstückig ausgebildeter topfartiger Anlage-Teil 58 vorgesehen. Zwischen dem Ring-Zylinder-Abschnitt 29"" und dem Anlage-Teil 58 ist ein Ringraum 33"" ausgebildet, der zur teilweisen Aufnahme einer Schrauben-Druckfeder 39"" dient, die sich gegen dessen Boden 59 abstützt, der das Anlage-Teil 58 mit dem Ring-Zylinder-Abschnitt 29"" verbindet. Mit ihrem anderen Ende stützt sich die Schrauben-Druckfeder 39"" gegen eine durch eine Mutter 53 gebildete als Widerlager 41"" dienende Scheibe ab. Zwischen dem zylindrischen Anlage-Teil 58 und dem Kolben-Lager-Abschnitt 28"" ist eine ringzylinderförmige Aufnahme 35"" ausgebildet, gegen deren Boden 60 sich eine Schrauben-Druck-Feder 36"" abstützt, die einen geringeren Durchmesser als die Schrauben-Druck-Feder 39"" hat. Die Schrauben-Druckfeder 36"" stützt sich gegen den Boden 54 am Übergang zwischen der Stößel-Stange 23"" und dem Kolben-Lager-Abschnitt 28"" ab.

Dadurch daß die beiden Schrauben-Druckfedern 36"" und 39"" jeweils über fast die volle Länge des Dämpfungs-Kolbens 29"" in diesen hineinragen, wird eine besonders geringe Baulänge des Stößels 18"" und damit des Schwingungsdämpers erreicht.

## Patentansprüche

1. Reibungsdämpfer, insbesondere für Waschmaschinen mit Schleudergang, bestehend aus einem Gehäuse (12) mit im wesentlichen kreiszylindrischer Innenwand (26) und aus einem koaxial in dem Gehäuse (12) verschiebbaren, mit einem Ende aus dem Gehäuse (12) herausgeführten und am anderen Ende mit mindestens einem Dämpfungs-Kolben (29; 29"; 29"'; 29"") versehenen Stößel (18; 18'; 18"; 18"'; 18""), wobei der Dämpfungs-Kolben (29; 29"; 29"'; 29"") auf einem Kolben-Lager-Abschnitt (28; 28"; 28"'; 28'''') des Stößels (18; 18'; 18'';18'''; 18'''') zwischen gegen am Stößel (18; 18'; 18''; 18'''; 18'''') ausgebildete Anschläge (41,37; 41'', 47; 41''', 47'''; 41'''', 54) anliegenden Federelementen verschiebbar angeordnet und mit einem elastisch gegen die Innenwand (26) des Gehäuses (12) angedrückten Reibungsbelag (32) versehen ist, und wobei am jeweiligen Ende des Stößels (18; 18'; 18"; 18"'; 18"") und des Gehäuses (12) Befestigungselemente (19, 15) ausgebildet sind, dadurch gekennzeichnet, daß die Federelemente durch vorgespannte Druckfedern (36, 39; 36", 39"; 56, 57; 36"", 39"") gebildet sind.

2. Reibungsdämpfer nach Anspruch 1, dadurch gekennzeichnet, daß die Druckfedern durch Schrauben-Druckfedern (36, 39; 36"; 39"; 36"", 39"") gebildet sind.

3. Reibungsdämpfer nach Anspruch 1 oder 2, dadurch gekennzeichnet, daß die Druckfedern (36, 39; 36", 39"; 56, 57; 36"", 39"") zumindest im wesentlichen gleiche Charakteristiken aufweisen.

4. Reibungsdämpfer nach einem der Ansprüche 1 bis 3, dadurch gekennzeichnet, daß die Vorspannkraft der Druckfedern (36, 39; 36", 39"; 56, 57; 36"", 39"") etwa gleich der Haftreibungskraft zwischen Dämpfungs-Kolben (29; 29"; 29"'; 29"") und Innenwand (26) des Gehäuses (12) ist.

5. Reibungsdämpfer nach einem der Ansprüche 1 bis 4, dadurch gekennzeichnet, daß die maximale Verschiebbarkeit des Dämpfungs-Kolbens (29; 29"; 29"'; 29"") aus einer mittleren Ruhelage auf dem Kolben-Lager-Abschnitt (28; 28"; 28"'; 28"") größer ist als die Amplitude bei überkritischer Drehzahl der Waschmaschine.

6. Reibungsdämpfer nach einem der Ansprüche 1 bis 5, dadurch gekennzeichnet, daß die Druckfedern (36, 39; 36", 39"; 56, 57; 36"", 39"") derart vorgespannt sind, daß bei vollständiger Zusammendrückung der auf einer Seite des Dämpfungs-Kolbens (29; 29"; 29"'; 29"") befindlichen Druckfeder (36 39; 36", 39"; 56, 57; 36"", 39"") die auf der anderen Seite des Dämpfungs-Kolbens (29; 29"; 29"'; 29"") befindliche Druckfeder (39, 36; 36", 39"; 56, 57; 36"", 39"") angenähert aber noch nicht vollständig entspannt ist.

7. Reibungsdämpfer nach einem der Ansprüche 1 bis 6, dadurch gekennzeichnet, daß mindestens eine Schrauben-Druckfeder (39; 56, 57; 36"", 39"") teilweise in einem Ringraum (33; 33"", 35"") innerhalb des Dämpfungs-Kolbens (29; 29"'; 29"") angeordnet und abgestützt ist.

8. Reibungsdämpfer nach einem der Ansprüche 2 bis 7, dadurch gekennzeichnet, daß eine Schrauben-Druckfeder (36) im wesentlichen in einer am Stößel (18) ausgebildeten Aufnahme (35) angeordnet und abgestützt ist.

9. Reibungsdämpfer nach einem der Ansprüche 1 bis 8, dadurch gekennzeichnet, daß eine Druckfeder (36) gegen eine Lagerbüchse (34) des Dämpfungs-Kolbens (29) anliegt.

10. Reibungsdämpfer nach Anspruch 8 und 9, dadurch gekennzeichnet, daß die Lagerbüchse (34) zumindest teilweise in die Aufnahme (35) eintauchbar ausgebildet ist.

11. Reibungsdämpfer nach Anspruch 7, dadurch gekennzeichnet, daß beide Druckfedern (56, 57; 36"", 39"") in einen Ringraum (33, 33"") innerhalb des Dämpfungs-Kolbens (29"'; 29"") hineinragen.

12. Reibungsdämpfer nach Anspruch 1, dadurch gekennzeichnet, daß die Druckfedern als Kegel-Druckfedern (56, 57) ausgebildet sind.

13. Reibungsdämpfer nach Anspruch 12, dadurch gekennzeichnet, daß die Schrauben-Druckfedern (36"", 39"") einander teilweise überdeckend in den Dämpfungs-Kolben (29"") hineinragen.

14. Reibungsdämpfer nach Anspruch 1, dadurch gekennzeichnet, daß der Stößel (18') zur Veränderung der Vorspannung der Druckfedern (36, 39) längenveränderbar ist.

15. Reibungsdämpfer nach Anspruch 14, dadurch gekennzeichnet, daß der Stößel (18') aus einem äußeren Stößel-Rohr (24') und einer in diesem verschiebbaren Stößel-Stange (23') gebildet ist, die in Ausnehmungen (45) des Stößel-Rohres (24') durch anformbare Vorsprünge (27') festlegbar ist.

16. Reibungsdämpfer nach Anspruch 1, dadurch gekennzeichnet, daß der Stößel (18") zweiteilig ausgebildet ist und an jeweils einem Teil ein Anschlag (41", 48) für die Druckfedern (39", 36") ausgebildet ist.

## Claims

1. A frictional damper, in particular for spinner-type washing machines, comprising a housing (12) with a substantially annular cylindrical inside wall (26) and a tappet (18; 18'; 18"; 18"'; 18"") coaxially displaceable in the housing (12) and one end of which is guided out of the housing (12) and the other end of which is provided with at least one damping piston (29; 29"; 29"'; 29""), the latter being disposed on a piston-bearing section (28; 28"; 28"'; 28"") of the tappet (18; 18'; 18"; 18"'; 18"") to be displaceable between spring elements bearing against stops (41, 37; 41", 47; 41"', 47"'; 41"", 54) formed on the tappet (18; 18'; 18"; 18"'; 18"") and provided with a friction lining (32) elastically pressed against the inside wall (26) of the housing (12), and fastening elements (19, 15) being formed on the respective end of the tappet (18; 18'; 18"; 18"'; 18"") and of the housing (12), characterized in that the spring elements are compressively pre-stressed compression springs (36, 29; 36", 39"; 56, 57; 36"", 39"").

2. A frictional damper according to claim 1, characterized in that the compression springs are helical compression springs (36, 39; 36", 39"; 36"", 39"").

3. A frictional damper according to claim 1 or 2, characterized in that the compression springs (36, 39; 36", 39"; 56, 57; 36"", 39"") at least substantially have identical characteristics.

4. A frictional damper according to one of claims 1 to 3, characterized in that the biasing force of the compression springs (36, 39; 36", 39"; 56, 57; 36"", 39"") is about equal to the stiction between the damping piston (29; 29"; 29"'; 29"") and the inside wall (26) of the housing (12).

5. A frictional damper according to one of claims 1 to 4, characterized in that the maximum displaceability of the damping piston (29; 29"; 29"'; 29"") out of a central position of rest on the piston-bearing section (28; 28"; 28"'; 28"") exceeds the amplitude in the case of supercritical speed of the washing machine.

6. A frictional damper according to one of claims 1 to 5, characterized in that the compression springs (36, 39; 36", 39"; 56, 57; 36"", 39"") are compressively pre-stressed such that when the compression spring (36, 39; 36", 39"; 56, 57; 36"", 39"") located on one side of the damping piston (29; 29"; 29"'; 29"") is completely compressed, the compression spring (36, 39; 36", 39"; 56, 57; 36"", 39"") located on the other side of the damping piston (29; 29"; 29"'; 29"") is released approximately, but not entirely.

7. A frictional damper according to one of claims 1 to 6, characterized in that at least one helical compression spring (39; 56, 57; 36"", 39"") is partially disposed and supported in an annular chamber (33; 33"", 35"") within the damping piston (29; 29"'; 29"").

8. A frictional damper according to one of claims 2 to 7, characterized in that a helical compression spring (36) is substantially disposed and supported in a receptacle (35) formed on the tappet (18).

9. A frictional damper according to one of claims 1 to 8, characterized in that a compression spring (36) bears against a bearing bush (34) of the damping piston (29).

10. A frictional damper according to claim 8 and 9, characterized in that the bearing bush (34) is formed to be at least partially immersed into the receptacle (35).

11. A frictional damper according to claim 7, characterized in that both compression springs (56, 57; 36"", 39"") project into an annular chamber (33, 33"") within the damping piston (29"'; 29"").

12. A frictional damper according to claim 1, characterized in that the compression springs are conical compression springs (56, 57).

13. A frictional damper according to claim 12, characterized in that the helical compression springs (36"", 39""), while partially overlapping, project into the damping piston (29"").

14. A frictional damper according to claim 1, characterized in that for the change of bias of the compression springs (36, 39), the length of the tappet (18') is adjustable.

15. A frictional damper according to claim 14, characterized in that the tappet (18') comprises an exterior tappet tube (24') and a tappet push rod (23'), which is displaceable in the latter and which is lockable in recesses (45) of the tappet tube (24') by means of projections (27') to be formed on the tappet push rod (23').

16. A frictional damper according to claim 1, characterized in that the tappet (18") has two parts and that a stop (41", 48) for the compression springs (39", 36") is formed on each part.

## Revendications

1. Amortisseur à friction, en particulier pour machines à laver avec essorage, constitué par un logement (12) avec un coulisseau (18; 18'; 18"; 18"'; 18"") dans la paroi intérieure (26) essentiellement circulaire cylindrique et muni d'au moins un piston d'amortissement (29; 29"; 29"'; 29"") déplaçable coaxialement dans le logement (12) avec une extrémité sortie du logement (12) et sur l'autre extrémité du coulisseau (18; 18'; 18"; 18"'; 18""), le piston d'amortissement (29; 29"; 29"'; 29"") étant disposé de façon déplaçable sur une section palier-piston (28; 28"; 28"'; 28"") du coulisseau (18; 18'; 18"; 18"'; 18"") entre des butées (41, 37; 41", 47; 41"', 47"'; 41"", 54) conçues contre le coulisseau (18; 18'; 18"; 18"'; 18"") contigu à des éléments à ressorts et avec une garniture à friction (32) appliquée élastiquement contre la paroi interne (26) du logement (12) et des éléments de fixation (19, 15) étant prévus sur l'extrémité respective du coulisseau (18; 18'; 18"; 18"'; 18"") et du logement (12), caractérisé en ce que les éléments à ressorts sont conçus par des ressorts de compression précontraints (36, 39; 36", 39"; 56, 57; 36"", 39"").

2. Amortisseur à friction selon la revendication 1, caractérisé en ce que les ressorts à compression sont formés par des ressorts à compression hélicoïdaux (36, 39; 36", 39"; 36"", 39"").

3. Amortisseur à friction selon la revendication 1 ou 2, caractérisé en ce que les ressorts à compression (36, 39; 36", 39"; 56, 57; 36"", 39"") présentent au moins pour l'essentiel les mêmes caractéristiques.

4. Amortisseur à friction selon l'une des revendications 1 à 3, caractérisé en ce que la force de précontrainte des ressorts à compression (36, 39; 36", 39"; 56, 57; 36"", 39"") est approximativement égale à la force de friction par adhérence entre le piston d'amortissement (29; 29"; 29"'; 29"") et la paroi interne (26) du logement (12).

5. Amortisseur à friction selon l'une des revendications 1 à 4, caractérisé en ce que le déplacement maximum du piston d'amortissement (29; 29"; 29"'; 29"") à partir d'une position de repos médiane sur la section palier-piston (28; 28"; 28"'; 28"") est supérieur à l'amplitude pour un nombre de tours surcritique de la machine à laver.

6. Amortisseur à friction selon l'une des revendications 1 à 5, caractérisé en ce que les ressorts à compression (36, 39; 36", 39"; 56, 57; 36"", 39"") sont précontraints de telle sorte qu'en cas de compression totale les ressorts à compression (36, 39; 36", 39"; 56, 57; 36"", 39"") se trouvant sur un côté du piston d'amortissement (29; 29"; 29"'; 29"") se rapprochent des ressorts à compression (39, 36; 36", 39"; 56, 57; 36"", 39"") situés de l'autre côté du piston d'amortissement (29; 29"; 29"'; 29"") mais sans être encore totalement relâchés.

7. Amortisseur à friction selon l'une des revendications 1 à 6, caractérisé en ce qu'au moins un ressort à compression hélicoïdal (39; 56, 57; 36"", 39"") est disposé partiellement dans une zone annulaire (33; 33"", 35"") à l'intérieur du piston d'amortissement (29; 29"'; 29"") et se trouve appuyé dans celui-ci.

8. Amortisseur à friction selon l'une des revendications 2 à 7, caractérisé en ce qu'un ressort à compression hélicoïdal (36) est disposé et supporté essentiellement dans un évidement (35) formé sur le coulisseau (18).

9. Amortisseur à friction selon l'une des revendications 1 à 8, caractérisé en ce qu'un ressort à compression (36) s'appuie contre une douille de palier (34) du piston d'amortissement (29).

10. Amortisseur à friction selon les revendications 8 et 9, caractérisé en ce que la douille de palier (34) est formée au moins partiellement de façon à pouvoir être enfoncée dans l'évidement (35).

11. Amortisseur à friction selon la revendication 7, caractérisé en ce que les deux ressorts à compression (56, 57; 36"", 39"") font saillie dans une zone annulaire (33, 33"") à l'intérieur du piston d'amortissement (29"'; 29"").

12. Amortisseur à friction selon la revendication 1, caractérisé en ce que les ressorts à compression sont conçus sous forme de ressorts à compression coniques (56, 57).

13. Amortisseur à friction selon la revendication 12, caractérisé en ce que les ressorts à compression hélicoïdaux (36"", 39"") sont partiellement juxtaposés et s'engagent dans le piston d'amortissement (29"").

14. Amortisseur à friction selon la revendication 1, caractérisé en ce que le coulisseau (18') est déplaçable longitudinalement pour modifier la précontrainte des ressorts de compression (36, 39).

15. Amortisseur à friction selon la revendication 14, caractérisé en ce que le coulisseau (18') est formé à partir d'un tube de coulisseau extérieur (24') et d'une tige de coulisseau (23') déplaçable dans celui-ci et qui peut être fixée dan des évidements (45) du tube de coulisseau (24') par des saillies déformables (27').

16. Amortisseur à friction selon la revendication 1, caractérisé en ce que le coulisseau (18") est conçu en deux parties et sur respectivement une partie est formée une butée (41", 48) pour les ressorts de compression (39", 36").
